# FASCICULE DE BREVET EUROPEEN

(11) **EP 1 178 909 B1**
(45) Date de publication et mention de la délivrance du brevet: **22.10.2003**
(21) Numéro de dépôt: 00900530.7
(22) Date de dépôt: 06.01.2000
(51) Int. Cl.: B62C 1/08, B60B 1/02, B60B 9/26

(54) **ROUE POUR VOITURES DE SPORT HIPPOMOBILE**
RAD FÜR PFERDERENNWAGEN
WHEEL FOR HORSE-DRAWN SPORT VEHICLES

(30) Priorité: 07.01.1999 FR 9900100
(43) Date de publication de la demande: 13.02.2002
(73) Titulaire: Lederlin, Guy, 95340 Persan (FR)
(72) Inventeur: Lederlin, Guy, 95340 Persan (FR)
(86) Numéro de dépôt international: FR0000017
(87) Numéro de publication internationale: WO00040448

(56) Documents cités:
- US-A- 2 378 154
- US-A- 5 110 190

## Description

L'invention concerne les trains-de roulement des voitures de sport hippomobile, notamment ceux des voitures utilisées en compétition de trot attelé.

Traditionnellement les trains de roulement de ces voitures, appelées "sulkies", s'élaborent à partir des constituants de l'industrie du cycle, et notamment de leurs roues à rayons en corde à piano, équipées de pneumatiques, dont le diamètre n'exéde pas 28 pouces.

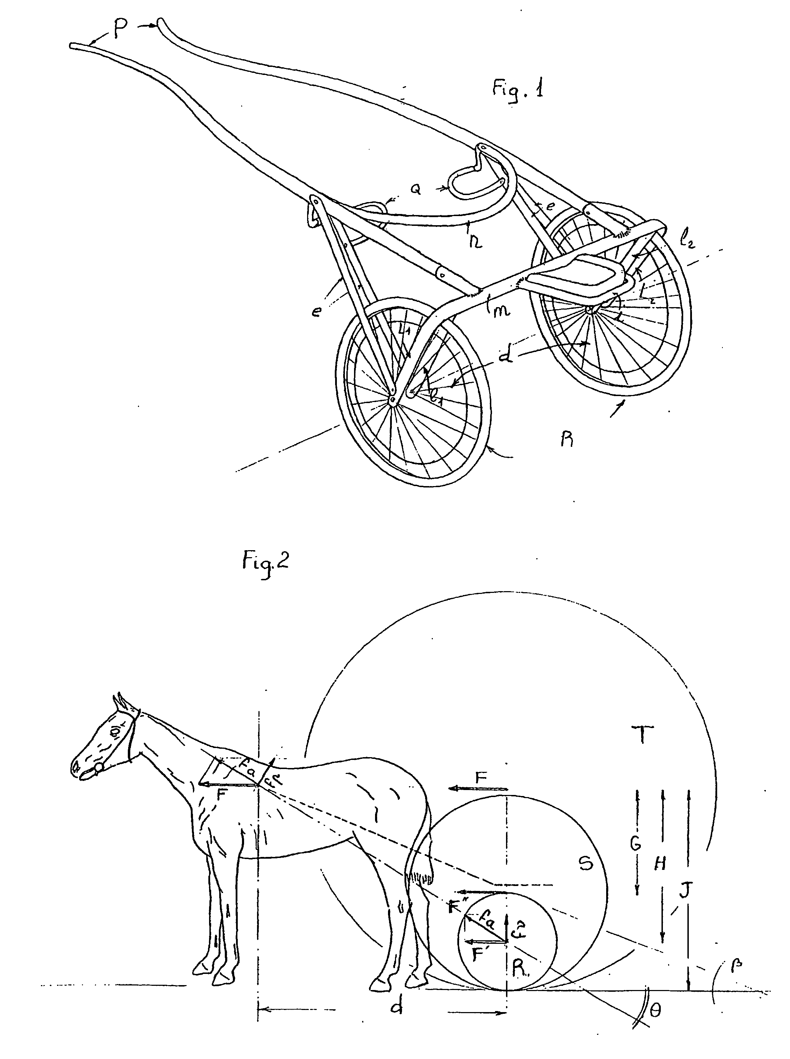

En regard de la fig. n°1, c'est cette technologie qui a fait adopter l'enserrement de chaque roue (R) par une fourche dont les bras (L1 ou L2) sont obtenus par pliage à angles sensiblement droits et coplanaires des extrémités d'un profil creux appelé "Pont" (m) ; Chacun des deux autres bras (I1 et I2) de fourche, venant se raccorder au pont (m), par soudure, brasure ou boulonnage. Quant aux roues (R), elles sont maintenues à poste par des broches traversant leurs moyeux et reliant mécaniquement les extrémités des deux bras de chaque fourche. Entre les deux fourches, ce même pont (m) reçoit côté amont par emmanchement, les deux limons (P), souvent reliés par un cintre (n), munis de cale-pieds (Q) ; ces mêmes limons (P), étant individuellement reliés à chaque bras (L1, I1 et L2, I2) de chaque fourche, par des biellettes (e), calant ainsi l'angle de chasse des roues (R).

L'équilibre du véhicule est obtenu par le poids du meneur, dont la console d'assise (i), en porte-à-faux côté aval, assure le contre-balancement.

Enfin, et pour des raisons de sécurité, chaque roue (R) reçoit sur chacune de ses faces, une flasque (d), généralement en polycarbonate, qui ne figure qu'à l'unité par roue sur la fig. n°1, où l'on a réduit son diamètre pour plus de clarté.

A cette succincte description on peut ajouter les constatations suivantes :
- Pour des raisons de devis de poids, la majorité des sulkies ont un train de roulement démuni de système de suspension et ce, malgré la rigidité du procédé par bras-poussés, issu de l'utilisation de fourches.
- Si l'apposition des flasques de protection sur chaque face de roue est obligatoire en compétition, le poids et le prix de celles-là grève lourdement les devis de celles-ci, en même temps qu'elles apportent une fâcheuse prise au vent latéral,( fardage).

Certaines solutions ont tenté de parer à ces inconvéniants, comme la roue dite "flexible", à moyeu flottant présentée par E. M. Nelson le 12.06.45 sous le n° US-A-2378154, mais qui grève encore plus avant le devis de poids au profit du confort ; ou encore la solution proposée par Johnson le 05.05.92, sous le n° US-A-5110190, qui substitue aux rayons métalliques rigides des roues, des rayons en fibres polymères souples, mais dont la résistance nécessite des matières et technologies à fortes valeurs ajoutées.

La description qui suit, et qui apporte des solutions pour améliorer le rendement et la sécurité des trains de roulement des voitures de trot hippomobile tout en réduisant leur coût, est accompagnée de dessins sur lesquels :
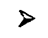 La fig. n°1 montre en vue perspective un sulky traditionnel comme on vient de le décrire.
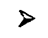 La fig. n°2 schématise, par comparaison latérale dimensionnelle, l'augmentation du rendement d'une roue de voiture hippomobile en fonction de son diamètre.
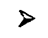 La fig. n°3 montre, en vue perspective partielle schématisée, le concept d'un demi train de sulky selon l'invention.
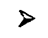 Les fig. n° 4a et 4b montrent, en projection latérale, l'ouverture d'angle entre limons et fourches, exploitée par les sulkies traditionnels pour maintenir l'équilibre longitudinal de la voiture.
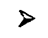 Toujours en bi-dimensionnel, la fig. n°5 montre l'ouverture d'angle entre limon et mono-bras du train de roulement préconisée par l'invention.
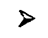 La fig. n°6 illustre en vue perspective un exemple de possibilité de moyeu de roue haubanée selon l'invention.
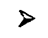 La fig. n°7 montre, par un schéma en plan, un exemple d'haubanage de roue de cycle, selon l'invention.

En regard de la fig. n°2, sur laquelle on a positionné à même échelle un cheval de gabarit moyen, par rapport à son sulky (schématisé sur son arrière, en traits tirés) supporté par une (R) de ses deux roues de diamètre standard, et dont l'axe du moyeu se situe à une hauteur (H) en dessous de celui d'action de la traction animale, et à une distance (d) de son point d'application à hauteur (J) de l'épaule de l'équidé.

De ce point d'application, on décompose la force (F) de traction en :
- Une composante (fa) tangentielle à cette droite d'action reliant le point d'application de la force (F) à l'axe du moyeu de la roue (R), selon l'angle (θ).
- Une composante (fp), normale à le précédente, donc dirigée vers le haut et l'arrière, ce qui est autant de perdu dans la direction du travail recherché.

On ne retrouve donc, au moyeu de la roue (R) que la force (fa) orientée selon l'angle (θ). Il faut re-décomposer cette dernière selon l'axe longitudinal, parallèle au sol, à hauteur de celui du moyeu, pour connaître la grandeur effective de la traction animale sur la roue (R).

Cette nouvelle décomposition fait de nouveau apparaître une composante normale (fv) tendant à soulever la roue (R) au détriment de la direction du travail recherché qui se résume ici en une force (F'), d'intensité nettement inférieure à la force initiale (F).

Toutes choses étant égales par ailleurs, et notamment la distance (d), cette description fait ressortir l'intérêt de tenir compte de la hauteur du point traction animale, pour déterminer le diamètre de la roue, grandeurs qui définissent l'angle (θ) de projection des forces.

En théorie, on aboutit à une roue (T), de rayon égal à la hauteur (J) du point de traction, l'angle (θ) s'étant annulé, la force (F) initiale se retrouve intégralement à l'axe du moyeu de la roue (T).

Mais un tel diamètre de roue, du type cycle, et de surcroît protégée par des flasques, sans tenir compte des problèmes d'accès à poste, demanderait une augmentation de voie considérable pour assurer la stabilité latérale, non seulement par sa prise au vent, mais par la surélévation du centre de gravité d'une masse accrue, surtout si l'on persiste à appliquer l'architecture à fourches de roues.

Mais, entre ce diamètre extrême et celui de la roue standard de 28 pouces existe un plage d'application fonctionnelle, à l'exemple de la roue (S) sur la fig. n°2, dont l'axe du moyeu, situé à hauteur (G) de l'axe de traction animale, réduit la valeur de l'angle (θ) à celle de l'angle (β), ce qui diminue d'autant les pertes par projection(s), et donne une force (F") à hauteur d'axe de son moyeu, d'intensité intermédiaire entre celles de (F) et (F'), si on résout les problèmes conséquents d'augmentation de poids et de fardage, sans atteindre ceux d'accès à poste, en modifiant l'architecture conventionnelle des voitures de trot attelé actuelles.

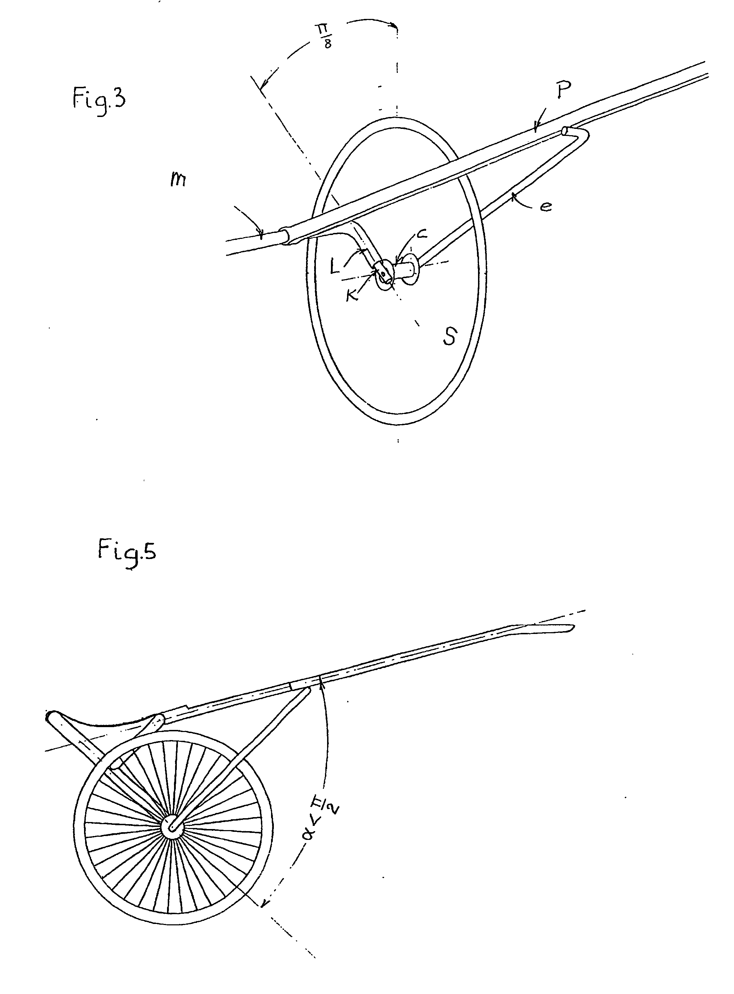

La présente invention applique donc à ces voitures le procédé du mono-bras (L, fig.n°3) par roue (S), en remplacement du procédé par fourche(s), comme dans l'exemple de la fig. n°1 (L+1).

Cette architecture s'avère rentable si elle est appliquée dans le sens où chaque roue est en porte-à-faux à l'extérieur de chaque côté du pont (m) les reliant, puisqu'elle n'implique plus d'augmentation de longueur de bras, comme cela serait pour le bras d'une fourche, ce qui réduit d'autant le poids.

Ce mono-bras (L) par roue (S) pouvant ou non être équipé d'une suspension élastique du porte fusée (K), du type télescopique dans l'exemple de la fig. n°3. Le glissement axial de la roue (S) le long de sa fusée est annihilé côté face externe, par une unique biellette (e) reliant fusée et limon (P), calant ainsi l'angle du mono-bras (L).

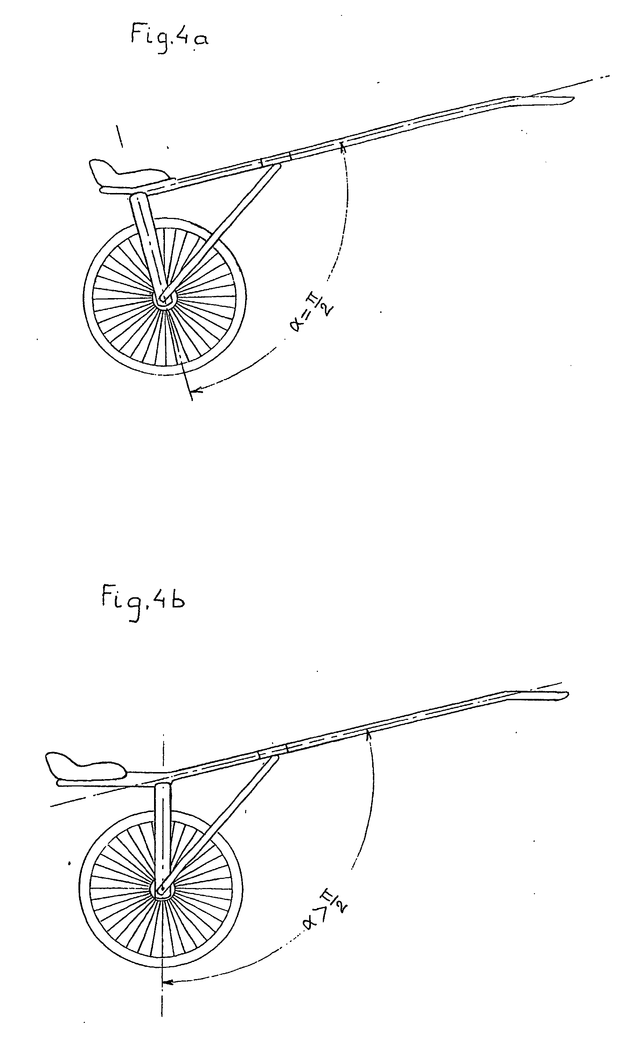

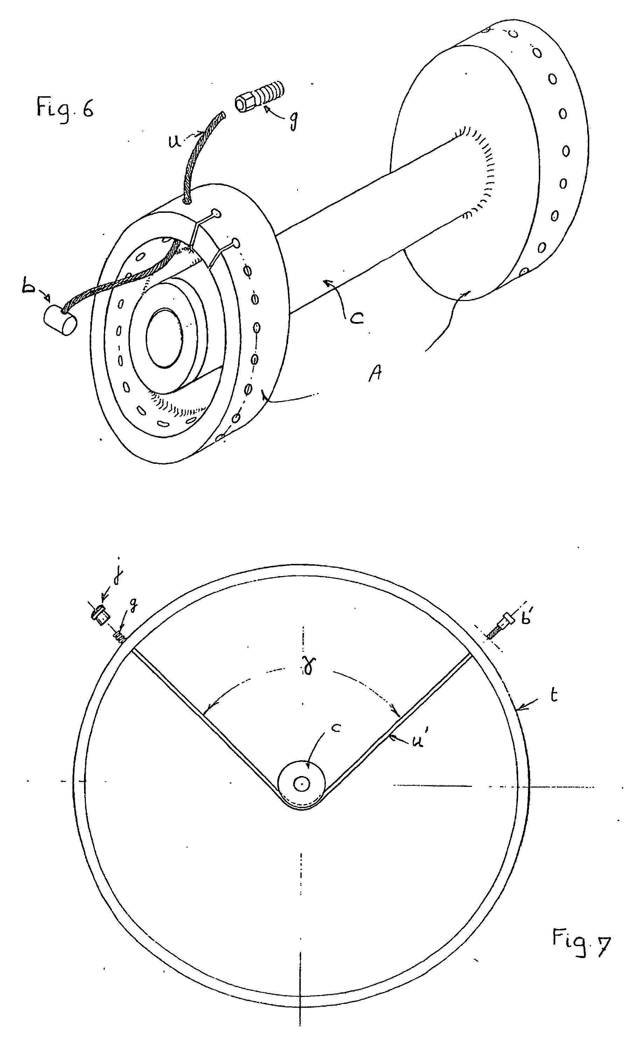

De fait, sur les voitures de trot attelé sportif, cet angle est réglé par le dièdre (α, fig. n°4a et 4b) d'ouverture transversale entre plan des fourches et plan des limons. Alors qu'en architecture conventionnelle ce dièdre (α) n'est jamais inférieur à π/2 (fig. n°4a), sinon plus obtus (fig. n°4b), ce même dièdre est toujours inférieur à π/2 dans le cadre de l'invention (fig. n°3 et 5).

Cela dans le but : d'une part de favoriser l'effet de suspension quand elle est appliquée comme dans l'exemple de la fig. n°3, où le dièdre (α) atteint ici la valeur limite qui permet de se passer d'amortissement de suspension ; d'autre part de se passer de console d'assise (i, fig. N°1) ce qui réduit d'autant le devis de poids.

Mais, si l'apport du mono-bras à de grandes roues du type cycle résout les problèmes d'accès à poste et d'accroissement de poids de la structure de la voiture, il ne change rien à l'accroissement de poids et fardage de toutes roues de ces mêmes voitures tant qu'elles sont équipées de flasques, et *a fortiori* pour des roues de grand diamètre. En effet, si cette protection est imposée par des règlements de course, c'est dû à la dangerosité des rayons de roue en corde à piano, donc rigides, qui sont autant d'aiguilles perforantes en cas de bris au cours d'un accident - aiguilles d'autant plus longues que le diamètre de la roue endommagée est grand.

Aussi, la solution apportée par la présente invention consiste à remplacer ces rayons en corde à piano, donc rigides en compression avant flambage, par des haubans en câbles multitorons, donc souples, qui ne travaillent qu'en traction, entre moyeu et jante de roue.

Comme on peut le voir sur l'exemple de la fig. n°6, un moyeu (C) comporte à chacune de ses extrémités une couronne (A) solidaire, mais radialement perforée et/ou fendue pour permettre le passage de câbles (u) dont une extrémité comporte un embout 'tambour' (b, fig. n°6) ou 'goupille' (b', fig. n°7) venant se loger dans un évidement prévu à cet effet dans la couronne, verrouillant ainsi, sur tension, cette extrémité de câble, tandis que l'autre est brasée ou soudée ou encore sertie dans un manchon (g, fig. n°6) extérieurement fileté.

Ce manchon (g), telle l'extrémité filetée d'un rayon en corde à piano, est repris à travers la jante perforée à cet effet, à l'aide d'un écrou (j) de rayon de cycle, permettant le réglage et le blocage en tension du câble (u).

Chaque moyeu se trouve ainsi haubané à chaque jante au moyen de câbles souples, ce qui, en dehors du fait de l'apport en suspension, évite toute blessure grave en cas de rupture, rendant obsolètes les flasques imposées par règlement, ce qui allège d'autant le devis de poids, annule la prise au vent latéral, et rend donc possible l'application de roues à grand diamètre.

Tout aussi bien qu'en rayonnage traditionnel, on peut réaliser des haubanages de roue droits ou plus ou moins croisés, comme cela se pratique dans la profession du cycle.

Mais des variantes d'haubanage de moyeu peuvent être réalisés comme, par exemple celui de la fig. n°7 où un même câble, mais de longueur double, réalise à lui seul deux haubans ; dans ce cas, ses deux extrémités sont munies soit d'un manchon fileté (g) chacune, soit l'une d'un embout 'goupille' (b'), l'autre restant à manchon fileté (g), permettant toujours leur tension sur la jante (t), le milieu de la longueur de câble venant tangenter le moyeu (C) au moyen d'un ou deux écrous (j), suivant la solution choisie, et ce, selon un angle (γ) déterminé par le nombre de haubans prévus par face, et donc par roue.

Aussi, mis à part le cas à tour-mort, cet angle d'haubanage ne peut être qu'un sous multiple de 2 π.

Une fois chaque roue haubanée et réglée à la tension requise, il est possible de verrouiller la partie des câbles tangentant des gorges prévues à cet effet aux extrémités du moyeu, à l'aide d'un collier ou d'un bague les enserrant concentriquement.

Les améliorations apportées ci-dessus aux trains des voitures hippomobiles de sport de compétition, ne se trouvent nullement limitées aux exemples de réalisation décrites et illustrées ici, de nombreuses variantes et modifications peuvent être envisagées dans le cadre des revendications jointes.

## Revendications

1. Roue à pneumatique de voiture de sport hippomobile, **caractérisée par** l'aubanage (b, u, g) de son moyeu (C, A) à sa jante à l'aide de câbles métalliques toronnés souples (U, U'), droits ou croisés entre eux.

2. Roue selon la revendication 1), **caractérisée en ce que** chaque extrémité de ses haubans comporte un embout de blocage (b), l'autre un manchon (g) de réglage et/ou verrouillage, qui peuvent être soit sertis, soit brasés, soit soudés, soit encore collés aux dites extrémités.

3. Roues selon la revendication 2) **caractérisées en ce que** les embouts de blocage des haubans sont du type soit "goupille" (b') soit "tambour" (b).

4. Roue selon la revendication 3) **caractérisée en ce que** son moyeu comporte des couronnes à empreintes (A) pour le logement d'embouts permettant le passage radial des haubans.

5. Roue selon la revendication 1) **caractérisée en ce que** les haubans ont leurs deux extrémités équipées du même manchon (g).

6. Roue selon les revendications 2) ou 5) **caractérisée en ce que** le ou les manchons (g) d'extrémité(s) de hauban présente(nt) une partie filetée extérieure permettant un réglage et un blocage par écrous de l'industrie du cycle (j).

7. Roue selon la revendication 6) **caractérisée en ce que** le moyeu comporte des gorges à ses extrémités (c) pour le passage tangent des haubans.

8. Roue selon la revendication 7) **caractérisée en ce qu'**elle comporte une bague ou un collier verrouillant le passage tangent de haubans aux extrémités du moyeu.

9. Voitures de trot attelé sportif, comportant des roues à pneumatiques selon l'une des revendications 1) à 8) **caractérisées en ce que** leur diamètre extérieur est supérieur à 712 mm (soit supérieur à 28 pouces).

10. Voitures selon la revendication 9) **caractérisées par** leur train de roulement par "mono-bras-poussés" (L) avec ou sans suspension incorporée, dont le dièdre avec les limons est inferieur à π/2 (fig. n° 5).

11. Voitures selon la revendication 10) **caractérisées en ce que** le dièdre est verrouillé à l'aide d'une seule biellette (e) reliant l'extrémité opposée de l'axe de roue, au limon correspondant.

## Patentansprüche

1. Bereiftes Rad für Pferderennwagen, **gekennzeichnet durch** eine Bespannung (b, u, g) zwischen der Radnabe (C, A) und der Felge in Form von geraden oder miteinander verkreuzten, flexiblen, verlitzten Metallseilen (U, U').

2. Rad nach Anspruch 1), **dadurch gekennzeichnet, dass** ein Ende dieser Seile mit einem Blockieransatz (b) und das jeweils andere mit einem Stell- und/oder Sperrzylinder (g) versehen ist; diese können an den genannten Enden eingequetscht, aufgelötet, aufgeschweißt oder aufgeklebt werden.

3. Rad nach Anspruch 2), **dadurch gekennzeichnet, dass** die Blockieransätze der Verseilungen vom Typ "Stift" (b') oder "Trommel" (b) sein können.

4. Rad nach Anspruch 3), **dadurch gekennzeichnet, dass** die Radnabe Kränze mit Vertiefungen (A) zur Aufnahme von Ansätzen aufweist, die einen radialen Verlauf der Seile erlauben.

5. Rad nach Anspruch 1), **dadurch gekennzeichnet, dass** beide Enden der Seile mit dem gleichen Zylinder versehen sind.

6. Rad nach den Ansprüchen 2) oder 5), **dadurch gekennzeichnet, dass** der bzw. die Zylinder (g) der Seilenden außen mit einem Gewindeelement versehen sind, das die Einstellung und Blockierung mit Muttern aus der Fahrradindustrie (j) erlaubt.

7. Rad nach Anspruch 6), **dadurch gekennzeichnet, dass** die Radnabe an den Rändern (c) Kehlen aufweist, die einen tangentialen Lauf der Seile erlaubt.

8. Rad nach Anspruch 7), **dadurch gekennzeichnet, dass** es einen Ring oder Bügel aufweist, der den tangentialen Lauf der Seile an den Rändern der Radnabe blockiert.

9. Wagen für Trabrennen, die bereifte Räder nach einem der Ansprüche 1) bis 8) aufweisen und **dadurch gekennzeichnet sind, dass** ihr Außendurchmesser über 712 mm (d.h. über 28 Zoll) beträgt.

10. Wagen nach Anspruch 9), **gekennzeichnet durch** ein "Einarm-Schub"-Fahrwerk (L) mit oder ohne integrierte Aufhängung, das mit dem Deichselbaum einen Winkel von unter π/2 bildet (Abb. Nr. 5).

11. Wagen nach Anspruch 10), **gekennzeichnet dadurch, dass** dieser Winkel durch eine einzige Stange (e) gehalten wird, die das entgegengesetzte Ende der Radachse mit dem entsprechenden Deichselbaum verbindet.

## Claims

1. Pneumatic-tyred wheel for a horse-drawn sports car, **characterised by** the bracing (b, u, g) of the hub (C, A) to the wheel rim, with flexible, stranded metal ropes (U, U'), straight or crossed between them.

2. Wheel as per claim 1), **characterised by** the fact that one tip of each stay rope is fitted with a blocking device (b), the other with an adjusting and/or locking sleeve (g), which can be crimped, brazed, welded or glued to the said tips.

3. Wheels as per claim 2) **characterised by** either a "pin" (b') or "drum" (b) type blocking device on the stay ropes.

4. Wheel as per claim 3) **characterised by** a hub with sprocket wheels (A) for inserting the ends to enable the radial passage of the stay ropes.

5. Wheel as per claim 1) **characterised by** the fact that both tips of the stay ropes are fitted with the same sleeve (g).

6. Wheel as per claim 2) or 5) **characterised by** the fact that the sleeve or sleeves (g) on the stay rope tips has/have an external threaded part for adjusting and a bicycle industry type blocking screw (j).

7. Wheel as per claim 6) **characterised by** a hub with grooves at the ends (c) for the tangent passage of the stay ropes.

8. Wheel as per claim 7) **characterised by** a ring or collar blocking the tangent passage of the stay ropes at the ends of the hub.

9. Trot race vehicles, with pneumatic tyres as per one of the claims 1) to 8) **characterised by** an external diameter above 712 mm (or above 28 inches).

10. Vehicles as per claim 9) **characterised by** their "single-spoke-thrust" running gear (L) with or without built-in suspension, whose dihedral angle with the strings is less than II/2 (fig. N° 5).

11. Vehicles as per claim 10) **characterised by** the fact that the dihedral angle is locked with a single tie rod (e) linking the opposite end of the wheel axis, to the corresponding string.
